# EUROPÄISCHE PATENTSCHRIFT

(11) **EP 0 415 141 B1**
(45) Veröffentlichungstag und Bekanntmachung des Hinweises auf die Patenterteilung: **09.03.1994**
(21) Anmeldenummer: 90115281.9
(22) Anmeldetag: 09.08.1990
(51) Int. Cl.: C09K 17/00, C05G 3/00, C05D 9/00

(54) **Bodenkonditionierungsmittel**
Soil conditioner
Agent de conditionnement du sol

(30) Priorität: 31.08.1989 AT 2050/89
(43) Veröffentlichungstag der Anmeldung: 06.03.1991
(73) Patentinhaber: Chemie Linz Gesellschaft m.b.H., A-4021 Linz (AT)
(72) Erfinder: Pieh, Stefan, Dr., A-4060 Leonding (AT); Krammer, Johann, A-4040 Linz (AT)
(74) Vertreter: Kunz, Ekkehard, Dr.

(56) Entgegenhaltungen:
- EP-A- 0 101 253
- WO-A-83/00498
- GB-A- 2 155 975
- US-A- 4 440 649

## Beschreibung

Die Erfindung betrifft die Verwendung von sulfonsäuregruppenhältigen, vernetzten Copolymerisaten auf Basis von Acrylamid oder Methacrylamid, eine Vinylgruppe enthaltenden Sulfonsäuren oder deren Salzen, einen Vinylgruppen enthaltenden Vernetzer, sowie gegebenenfalls carboxylgruppenhältigen Comonomeren, als Bodenkonditionierungsmittel.

Die Kultivierung von Pflanzen bringt vor allem in sandigen Böden unter ariden oder semiariden Bedingungen große Probleme mit sich. Ein wesentlicher Faktor ist die Wasserhaltekapazität des Bodens, da die Nährstoffaufnahme und die Wurzelausbildung der Pflanze entscheidend vom Wasser- bzw. Nährlösungsgehalt des Bodens abhängt. Neben der Wasserversorgung ist auch die Durchlüftung und Sauerstoffversorgung der Wurzeln ein wesentlicher Faktor, der die Entwicklung der Pflanze, insbesondere der Wurzeln, beeinflußt.

Es ist bekannt, dem Boden, vor allem zur Erhöhung der Rückhaltefähigkeit von Wasser oder wäßrigen Lösungen, carboxylgruppenhältige Copolymerisate zuzusetzen. Derartige Bodenkonditionierungsmittel, die aus einem Copolymerisat von Acrylamid und einem Salz der Acrylsäure, das mit Methylenbisacrylamid vernetzt ist, bestehen, werden beispielsweise in der EPA 72 214 und in der DE-OS 33 44 638 beschrieben. In der EPA 101 253 werden Bodenverbesserungsmittel auf Basis von Polyacrylamiden beschrieben, die keine ionischen Gruppen besitzen.

Der Nachteil der bekannten Bodenkonditionierungsmittel liegt vor allem darin, daß sie entweder eine nicht ausreichend hohe Absorptionskapazität aufweisen, bzw. daß ihre Absorptionskapazität bei Verwendung von salzhältigen wäßrigen Lösungen an Stelle von reinem Wasser stark absinkt. Eine besonders starke Verminderung der Absorptionskapazität tritt vor allem bei Vorhandensein mehrwertiger Kationen, wie z. B. Ca²⁺, Mg²⁺, Fe²⁺ oder Fe³⁺, auf. Diese Kationen kommen beispielsweise in verschiedenen Böden vor, bzw. sie können Bestandteile von Nahrstofflösungen sein. Vor allem in den ariden Trockengebieten ist es notwendig, die Pflanzen auch mit salzhältigem Wasser, das neben Alkali- und Erdalkaliionen auch mehrwertige Metallionen enthält, zu bewässern.

Ein zusätzlicher Nachteil der bekannten Bodenkonditionierungsmittel liegt ferner darin, daß bei Beregnung mit salzhältigem Wasser auch ihre Absorptionskapazität für in späteren Beregnungszyklen eingesetztes reines Wasser stark und teilweise irreversibel abnimmt.

Auf die Wechselwirkung zwischen Quellung des Bodenkonditionierungsmittels und chemischer Zusammensetzung bzw. Salinität des Beregnungswassers, wobei Salzkonzentrationen von 2 - 8 g/l möglich sind, wird beispielsweise in J. Sci. Food Agric. 1984 (35), Seite 1063 - 1066 bzw. 1985 (36), Seite 789 - 793 hingewiesen.

Ziel der vorliegenden Erfindung war es, die Nachteile der bekannten Bodenkonditionierungsmittel auszuschalten und vor allem ein Bodenkonditionierungsmittel mit hohem Rückhaltevermögen für Wasser und Salzlösungen zu finden, das auch bei wiederholter Absorption von Salzlösungen ein- oder mehrwertiger Kationen sein gutes Rückhaltevermögen für Wasser und Salzlösungen nicht verliert. Unerwarteterweise wurde gefunden, daß Copolymerisate auf Acrylamidbasis, die Sulfonsäuregruppen an Stelle von bzw. zusätzlich zu Carboxylgruppen aufweisen, während vieler Absorptions- und Desorptionszyklen von Wasser und Salzlösungen verwendet werden können und dabei ihr hohes Rückhaltevermögen für Wasser und Salzlösungen beibehalten.

Gegenstand der vorliegenden Erfindung ist demnach die Verwendung von sulfonsäuregruppenhältigen, vernetzten Copolymerisaten als Bodenkonditionierungsmittel, die aus
A) 50 bis 94,9 Mol% Acrylamid und/oder Methacrylamid,
B) 5 bis 49,9 Mol% einer eine Vinylgruppe enthaltenden Sulfonsäure oder deren Satz der allgemeinen Formel

   CH₂ = CR₁ - CO - NH - R₂ - SO₃M

   worin
   - R₁: Wasserstoff oder eine Methylgruppe,
   - R₂: eine geradkettige oder verzweigte Alkylengruppe mit 1 - 6 C-Atomen
   und
   - M: Wasserstoff oder ein einwertiges Kation bedeuten,
C) 0,005 bis 0,1 Mol% einer mehrfunktionellen, wasserlöslichen Vinylverbindung
aufgebaut sind, wobei die Polymerkomponente B von 0 bis 85 Mol%, bezogen auf den Gehalt an Polymerkomponente B, durch carboxylgruppenhältige Comonomere ersetzt sein kann.

Als carboxylgruppenhältige Comonomere sind beispielsweise substituierte oder unsubstituierte Acrylsäure oder Methacrylsäure sowie deren Salze oder Derivate zu verstehen, wie sie auch gemäß dem Stand der Technik zur Herstellung von Bodenkonditionierungsmitteln verwendet werden. Der Vorteil der Verwendung der erfindungsgemäßen Bodenkonditionierungsmittel ist umso größer, je höher der Gehalt an sulfonsäuregruppenhältiger Polymerkomponente B im Verhältnis zu den carboxylgruppenhältigen Comonomeren ist. Andererseits bringt jedoch bereits ein geringer Gehalt an sulfonsäuregruppenhältiger Polymerkomponente B im Bodenkonditionierungsmittel eine Verbesserung gegenüber dem Stand der Technik.

Besonders vorteilhaft ist die Verwendung von Copolymerisaten als Bodenkonditionierungsmitteln, die zu 70 bis 79,9 Mol% aus einer Polymerkomponente A, zu 20 bis 29,9 Mol% aus einer Polymerkomponente B und zu 0,005 bis 0,1 Mol% aus einer Polymerkomponente C aufgebaut sind.
Als Polymerkomponente A ist Acrylamid, als Polymerkomponente B ein Salz der Acrylamidomethylpropansulfonsäure, als Polymerkomponente C Methylenbisacrylamid bevorzugt.

Besonders bevorzugt ist die Verwendung von Copolymerisaten mit einer Polymerkomponente A, die aus Acrylamid, einer Polymerkomponente B, die aus einem Salz der Acrylamidomethylpropansulfonsäure und einer Polymerkomponente C, die aus Methylenbisacrylamid besteht.

Der Einsatz der erfindungsgemäßen Copolymerisate gestaltet sich besonders günstig, wenn sie zusätzlich Pflanzennährstoffe enthalten. Als Pflanzennährstoffe kommen alle in der Landwirtschaft gebräuchlichen in Frage. Besonders bevorzugt sind dies Nährstoffe aus der Gruppe der Stickstoff-, Phosphor-, Kalium, Eisen-, Zink-, Kupfer-, Mangan-, Molybdän- und Borsalze.

Besonders vorteilhaft sind Kultursubstrate zur Aufzucht von Pflanzen, die aus einer Mischung von Erde, Sand, Torf, Perlit, Vermiculit, Baumrinde, Holzspänen, organischem Dünger, Stroh, bzw. einem Gemisch dieser Bestandteile, mit den erfindungsgemäßen Copolymerisaten bestehen. Bevorzugt enthält dieses Kultursubstrat 0,1 bis 10 g/l Copolymerisate.

Ein weiterer Gegenstand der Erfindung ist ein Verfahren zur Konditionierung von Böden, bei dem 0,1 bis 10 g Copolymerisat je 1 Boden zugegeben werden. Die im Boden vorhandenen Copolymerisate werden bevorzugt zyklisch mit in Wasser gelösten Nährstoffen beladen bzw. wiederbeladen. Auf diese Weise ist es möglich, das Copolymerisat sowohl nach Aufnahme der Nährstoffe durch die Wurzeln, als auch nach deren Auswaschen durch Regen, auch im Falle der Beregnung mit salzhältigem Wasser, in weiteren Beladungszyklen immer wieder mit der Nährstofflösung zu beladen. Ein besonderer Vorteil des erfindungsgemäßen Bodenkonditionierungsmittels liegt dabei darin, daß seine Absorptionskapazität für Wasser und für wäßrige Salzlösungen, auch nach Kontakt mit Elektrolytlösungen, insbesondere mit mehrwertigen Kationen, etwa gleich hoch bleibt. Ein weiterer Vorteil liegt darin, daß die absorbierten Nährsalze durch Regen viel langsamer ausgewaschen werden als bei Verwendung bekannter Bodenkonditionierungsmittel.

Ein zusätzlicher Vorteil des erfindungsgemäßen Bodenkonditionierungsmittels ist weiters darin zu sehen, daß es insbesondere bei Zumischung zu schweren Böden, diesen eine lockere und luftdurchlässige Stuktur verleiht, wodurch die vor allem für ein gutes Wurzelwachstum notwendige gute Durchlüftung und Sauerstoffversorgung ermöglicht wird.

Die Herstellung der erfindungsgemäßen Bodenkonditionierungsmittel erfolgt nach bekannten Verfahren, beispielsweise gemäß EP-A1-068 189 durch Copolymerisation von Acrylamid oder Methacrylamid, einer eine Vinylgruppe enthaltenden Sulfonsäure, einer mehrfunktionellen Vinylverbindung als Vernetzer, sowie gegebenenfalls carboxylgruppenhältigen Comonomeren in wäßriger Lösung.

In einem bevorzugten Herstellungsverfahren werden der Monomerenlösung bereits vor der Polymerisation Pflanzennährstoffe zugesetzt. Dies bringt den Vorteil einer besonders guten und gleichmäßigen Verteilung der Pflanzennährsoffe im fertigen Copolymerisat.

### Herstellung der Copolymerisate:

### Copolymer A:

In einem 1000 ml Glasreaktor wurden bei 20°C 239,3 g 50 %ige Acrylamidlösung (1,68 Mol, 90 Mol%) und 85,64 g 50 %ige Acrylamidomethylpropansulfonsäure-Na-Lösung (0,19 Mol, 10 Mol%) vorgelegt und anschließend mit 40,3 mg Methylenbisacrylamid (0,00026 Mol, 0,014 Mol%) versetzt. Nach inniger Durchmischung wurde mit Salzsäure ein pH-Wert von 4,95 eingestellt und mit 323 g H₂O verdünnt. Nach 1 Stunde N₂-Spülung erfolgte die Initiierung der Reaktion mit 10,5 mg Na₂S₂O₅ und 21,0 mg (NH₄)₂S₂O₈. Die Reaktion verlief adiabatisch und war nach 2 Stunden abgeschlossen. Das erhaltene Polymergel wurde zerkleinert und bei 80 °C und 1 bar während 16 h getrocknet. Die Wasserspeicherkapazität lag bei 730 g/g Polymer.

### Copolymer B:

In einem 1000 ml Glasreaktor wurden bei 20 °C 142,16 g 50 %ige Acrylamidlösung (1 Mol, 60 Mol%) und 305,63 g 50 %ige Acrylamidomethylpropansulfonsäure-Na-Losung (0,67 Mol, 40 Mol%) vorgelegt und anschließend mit 36 mg Methylenbisacrylamid (0,00023 Mol, 0,014 Mol%) versetzt. Nach inniger Durchmischung wurde mit Salzsäure ein pH-Wert von 4,85 eingestellt und mit 469 g H₂O verdünnt. Nach 1 Stunde N₂-Spülung erfolgte die Initiierung der Reaktion mit 9,4 mg Na₂S₂O₅ und 18,7 mg (NH₄)₂S₂O₈. Die Reaktion verlief adiabatisch und war nach 2 Stunden abgeschlossen. Das erhaltene Polymergel wurde zerkleinert und bei 80 °C und 1 bar während 16 h getrocknet. Die Wasserspeicherkapazität lag bei 800 g/g Polymer.

### Copolymer C:

In einem 1000 ml Glasreaktor wurden bei 20 °C 142,16 g 50 %ige Acrylamidlösung (1 Mol, 70 Mol%), 78,68 g 50 %ige Acrylsäure-K-Lösung (0,357 Mol, 25 Mol%) und 35,04 g 50 %ige Acrylamidomethylpropansulfonsäure-K-Lösung (0,071 Mol, 4,97 Mol%) vorgelegt und anschließend mit 87,98 mg Methylenbisacrylamid (0,00057 Mol, 0,04 Mol%) versetzt. Nach Durchmischung wurde mit Salzsäure ein pH-Wert von 4,85 eingestellt und mit 256 g H₂O verdünnt. Nach 1 Stunde N₂-Spülung erfolgte die Initiierung der Reaktion mit 48,9 mg Na₂S₂O₅ und 97,8 mg (NH₄)₂S₂O₈. Die Reaktion verlief adiabatisch und war nach 2 Stunden abgeschlossen. Das erhaltene Polymergel wurde zerkleinert und bei 80 °C und 1 bar während 16 h getrocknet. Die Wasserspeicherkapazität lag bei 700 g/g Polymer.

### Copolymer D:

In einem 1000 ml Glasreaktor wurden bei 20 °C 239,3 g 50 %ige Acrylamidlösung (1,68 Mol, 90 Mol%) und 85,64 g 50 %ige Acrylamidomethylpropansulfonsäure-Na-Lösung (0,19 Mol, 10 Mol%) vorgelegt und anschließend mit 40,3 mg Methylenbisacrylamid (0,00026 Mol, 0,014 Mol%) versetzt. Nach inniger Durchmischung wurde mit Salzsäure ein pH-Wert von 4,85 eingestellt und mit 323 g H₂O verdünnt. In dieser Monomerenlösung wurden 3,89 g Ethylendiamintetraessigsäure-Dinatriumsalz und anschließend 0,972 g einer Mineralsalzmischung aus 31 % MnSo₄.H₂O, 35,6 % FeSo₄.7H₂O, 21,9 % ZnSo₄.7H₂O und 11,5 % CuSo₄.5H₂O gelöst, worauf der pH-Wert erneut auf 4,85 eingestellt wurde. Nach 1 Stunde N₂-Spülung erfolgte die Initiierung der Reaktion mit 31,2 mg Na₂S₂O₅ und 63,2 mg (NH₄)₂S₂O₈. Die Reaktion verlief adiabatisch und war nach 2 Stunden abgeschlossen. Das erhaltene Polymergel wurde zerkleinert und bei 80 °C und 1 bar während 16 h getrocknet. Die Wasserspeicherkapazität lag bei 700 g/g Polymer.

### Vergleichspolymer VA:

In einem 1000 ml Glasreaktor wurden bei 20 °C 142,16 g 50 %ige Acrylamidlösung (1 Mol), 94,39 g 50 %ige Acrylsäure-K-Lösung (0,43 Mol) und 236,6 g H₂O vorgelegt und anschließend mit 110 mg Methylenbisacrylamid (0,0007 Mol) versetzt. Nach Durchmischung wurde mit Acrylsäure ein pH-Wert von 7,0 eingestellt. Nach 1 Stunde N₂-Spülung erfolgte die Initiierung der Reaktion mit 40 mg Na₂S₂O₅ und 81 mg (NH₄)₂S₂O₈. Die Reaktion verlief adiabatisch und war nach 2 Stunden abgeschlossen. Das erhaltene Polymergel wurde zerkleinert und bei 80°C und 1 bar während 16 h getrocknet. Die Wasserspeicherkapazität lag bei 510 g/g Polymer.

### Vergleichspolymer VB:

In einem 1000 ml Glasreaktor wurden bei 20 °C 72.06 g Acrylsäure (1 Mol) und 283,7 g H₂O vorgelegt und unter Rühren langsam mit 46,76 g 90 %iger KOH neutralisiert. Anschließend wurden 23,13 mg Methylenbisacrylamid (0,00015 Mol) zugemischt und mit Acrylsäure ein pH-Wert von 7,0 eingestellt. Nach 1 Stunde N₂-Spülung erfolgte die Initiierung der Reaktion mit 17,9 mg Na₂S₂O₅ und 57 mg (NH₄)₂S₂O₈. Die Reaktion verlief adiabatisch und war nach 2 Stunden abgeschlossen. Das erhaltene Polymergel wurde zerkleinert und bei 80 °C und 1 bar während 16 h getrocknet. Die Wasserspeicherkapazität lag bei 475 g/g Polymer.

### Vergleichspolymer VC:

In einem 1000 ml Glasreaktor wurden bei 20 °C 142,16 g 50 %ige Acrylamidlösung (1 Mol) und 142,16 g H₂O vorgelegt und mit 21,6 mg Methylenbisacrylamid (0,00014 Mol) versetzt. Nach 1 Stunde N₂-Spülung erfolgte die Initiierung der Reaktion mit 5,68 mg Na₂S₂O₅ und 11,37 mg (NH₄)₂S₂O₈. Die Reaktion verlief adiabatisch und war nach 2 Stunden abgeschlossen. Das erhaltene Polymergel wurde zerkleinert und bei 80 °C und 1 bar während 16 h getrocknet. Die Wasserspeicherkapazität lag bei 120 g/g Polymer.

### Beispiel 1:

Das erfindungsgemäß verwendete Copolymer A wurde im Vergleich zu den Vergleichspolymeren VA und VB, die auch kommerziell erhältlich sind, auf seine Absorptionskapazität für H₂O und für eine 500 ppm FeCl₃-Lösung untersucht. Dazu wurde das Polymere (Korngröße 0,315 bis 0,5 mm) auf ein Drahtsieb mit 200 mm Durchmesser und 0,25 mm Maschenweite aufgestreut und unter Rühren in die Absorptionslösung getaucht. Nach Beendigung des Quellvorganges wurde das Sieb aus der Flüssigkeit genommen und nach einer Abtropfzeit von 25 min die Gewichtszunahme ermittelt. Die Quellzeiten (in h) sind in Tabelle 1 angeführt. Jedes der 3 Polymere wurde zuerst in H₂O, dann in einer 500 ppm FeCl₃-Lösung und schließlich 7 mal in H₂O gequollen, wobei das Wasser bei jedem der 7 Wasserzyklen erneut wurde.

Aus den in Tabelle 1 zusammengestellten Absorptionskapazitäten (g H₂O bzw. g Lösung je 1 g Copolymer) ist ersichtlich, daß das erfindungsgemäße Copolymer A seine Wasseraufnahmefähigkeit auch nach der Behandlung mit der FeCl₃-Lösung beibehält, während die Vergleichspolymere VA und VB auch nach wiederholter Bewässerung ihre Wasseraufnahmefähigkeit irreversibel verloren haben.

**Tabelle 1**

| Absorptionskapazität in g/g | | | | |
|---|---|---|---|---|
| | Quellzeit in h | Copolymer A | Vergl.Polymer VA | Vergl.Polymer VB |
| H₂O (1) | 15 | 730 | 510 | 475 |
| FeCl₃ (500 ppm) | 15 | 34 | 10 | 14 |
| H₂O (2) | 3 | 262 | 11 | 16 |
| H₂O (3) | 3 | 357 | 11 | 17 |
| H₂O (4) | 15 | 569 | 13 | 18 |
| H₂O (5) | 3 | 616 | 13 | 18 |
| H₂O (6) | 3 | 671 | 13 | 18 |
| H₂O (7) | 15 | 790 | 13 | 18 |
| H₂O (8) | 3 | 793 | 13 | 18 |

### Beispiel 2

Analog zu Beispiel 1 wurde die Absorptionskapazität für Ca-Salze bestimmt, wobei die Polymere jeweils in 3 Zyklen abwechselnd mit H₂O und einer CaCl₂-Lösung (400 ppm Ca-Ionen) behandelt wurden.

Die Ergebnisse sind in Tabelle 2 zusammengestellt. Sowohl die Aufnahmefähigkeit für die Ca-Lösung als auch die Wasseraufnahmefähigkeit, sowohl vor als auch jeweils nach einer Behandlung mit der Ca-Lösung, liegen beim erfindungsgemäßen Copolymer weit höher als bei den Vergleichspolymeren.

**Tabelle 2**

| Absorptionskapazität in g/g | | | | |
|---|---|---|---|---|
| | Quellzeit in h | Copolymer A | Vergl.Polymer VA | Vergl.Polymer VB |
| H₂O | 20 | 730 | 510 | 475 |
| 1. Ca-Ionen (400 ppm) | 18 | 58 | 33 | 23 |
| H₂O | 20 | 306 | 75 | 6 |
| 2. Ca-Ionen (400 ppm) | 18 | 58 | 29 | 7 |
| H₂O | 20 | 340 | 68 | 8 |
| 3. Ca-Ionen | 18 | 56 | 19 | 6 |
| H₂O | 20 | 343 | 72 | 7 |

### Beispiel 3

Analog zu Beispiel 1 wurde die Absorptionskapazität für eine Lösung von Spurenelementen bestimmt, wobei die Polymere abwechselnd mit H₂O und einer 500 ppm-Spurenelementelösung (27,9 % MnSo₄.H₂O, 12,6 % FeSo₄.7H₂O, 18,9 % CuSo₄.5H₂O, 28,3 % ZnSO₄.7H₂O, 9,2 % Borsäure, 4,0 % Na₂MoO₄) behandelt wurden.

In Tabelle 3 sind die weit besseren Ergebnisse des erfindungsgemäßen Copolymers A, auch nach mehrmaliger wechselweiser Behandlung, jenen der Vergleichspolymere VA und VB gegenübergestellt.

**Tabelle 3**

| Absorptionskapazität in g/g | | | | |
|---|---|---|---|---|
| | Quellzeit in h | Copolymer A | Vergl.Polymer VA | Vergl.Polymer VB |
| H₂O | 18 | 730 | 510 | 475 |
| 1. Spurenelemente-Lösung (500 ppm) | 2 | 85 | 23 | 7 |
| H₂O | 18 | 501 | 365 | 12 |
| 2. Spurenelemente-Lösung (500 ppm) | 20 | 101 | 3 | 11 |
| H₂O | 22 | 620 | 4 | 1 |

### Beispiel 4:

Analog zu Beispiel 1 wurde die Absorptionskapazität für eine 1200 ppm-Hydroponiklösung mit einem N : P : K-Verhältnis von 1 : 1,5 : 2 und anschließende Behandlung mit H₂O in mehreren Zyklen geprüft.

### Zusammensetzung der Hydroponiklösung:

45 g/l Ammoniumnitrat, 100 g/l Kaliumnitrat, 26 g/l Ammoniumhydrogenphosphat, 26 g/l Magnesiumnitrat.6H₂O, 62 g/l Kaliumhydrogenphosphat, 1,5 g/l Eisensulfat.7H₂O, 0,4 g/l Mangansulfat.H₂O, 0,08 g/l Kupfersulfat.5H₂O, 0,01 g/l Kobaltnitrat.7H₂O, 0,25 g/l Borsäure, 5,0 g/l Na-EDTA, 0,08 g/l Zinksulfat.7H₂O, 0,01 g/l Natriummolybdat.

Die Lösung wurde auf eine Konzentration von 1200 ppm verdünnt.

Die Ergebnisse der Absorptionszyklen für das Copolymer A sowie für die Vergleichspolymere VA und VC sind in Tabelle 4 zusammengestellt. Die Aufnahmekapazität des Copolymers A ist weitaus höher als jene der Vergleichspolymere und nimmt im Verlauf der Zyklen sogar zu, während jene der Vergleichspolymere zum Teil drastisch abnimmt.

**Tabelle 4**

| Absorptionskapazität in g/g | | | | |
|---|---|---|---|---|
| | Quellzeit in h | Copolymer A | Vergl.Polymer VA | Vergl.Polymer VC |
| H₂O | 16 | 730 | 510 | 120 |
| 1. Hydroponiklösung | 16 | 116 | 65 | 28 |
| H₂O | 5 | 836 | 266 | 23 |
| 2. Hydroponiklösung | 16 | 126 | 57 | 28 |
| H₂O | 5 | 1005 | 295 | 25 |
| 3. Hydroponiklösung | 16 | 137 | 42 | 28 |
| H₂O | 5 | 1097 | 286 | 26 |
| 4. Hydroponiklösung | 16 | 131 | 38 | 27 |

### Beispiel 5:

Zur Prüfung der Belastbarkeit mit salinem Wasser wurden die Bodenkonditionierungsmittel mit 600 g Sand in einer Menge von 3 g/l Sand vermischt, in Glassäulen von 6 cm Durchmesser 15 cm hoch gefüllt und mit 100 ml Wasser von steigender Salinität (1000 - 6000 ppm), entsprechend einer Beregnungshöhe von 35,4 mm behandelt.

### Ionenzusammensetzung im Wasser:

6 % HCO₃⁻, 51,32 % Cl⁻, 8,88 % SO₄²⁻, 19,9 % Na⁺, 1,54 % K⁺, 5,91 % Ca²⁺, 6,45 % Mg²⁺
Die relative Absorptionskapazität in % gegenüber reinem Sand (=100 %) ist für Mischungen von Sand mit jeweils 3 g Copolymer A, B oder C, sowie Vergleichspolymer VA, VB oder VC pro 1 Liter Sand in Tabelle 5 zusammengestellt. Die Absorptionskapazität der erfindungsgemäßen Bodenkonditionierungsmittel ist weitaus besser.

**Tabelle 5**

| Relative Absorptionskapazität der Böden (%) | | | | | |
|---|---|---|---|---|---|
| Salinität des Wassers in ppm | 1000 | 2000 | 3000 | 4000 | 6000 |
| 3 g A/l | 165 | 157 | 151 | 150 | 149 |
| 3 g B/l | 193 | 178 | 168 | 161 | 154 |
| 3 g C/l | 161 | 154 | 145 | 142 | 140 |
| 3 g VA/l | 160 | 130 | 119 | 120 | 117 |
| 3 g VB/l | 145 | 100 | 100 | 100 | 100 |
| 3 g VC/l | 123 | 123 | 121 | 122 | 121 |
| Vergl.Boden | 100 | 100 | 100 | 100 | 100 |

### Beispiel 6:

Zum Nachweis des geringeren Auswaschens von Spurenelementen aus erfindungsgemäß konditionierten Böden wurden die Polymere A, B, VA, VB, VC analog zu Beispiel 5 in einer Menge von 3 g/l mit 600 g Sand vermischt und in Glassäulen von 6 cm Durchmesser gefüllt. Anschließend wurden den Säulen 176 mm der in Beispiel 5 beschriebenen Salzlösung mit einem Gehalt von 1000 ppm -zur Simulierung einer Beregnung von 176 mm - aufgegeben und unten abgezogen. Anschließend wurde eine Cu-Lösung mit einer Menge von 2 mg/l Boden durch die Säulen geschickt und die Beregnung mit der Salzlösung in mehreren Stufen bis zu einer Beregnungshöhe von weiteren 283 mm fortgesetzt. Für die einzelnen Böden wurde jeweils nach 0, 36, 70, 106, 140, 176, 212, 247 und 283 mm Beregnung jener %Anteil der aufgegebenen Cu-Menge bestimmt, der noch im Boden vorhanden war. Die Werte sind in Tabelle 6 zusammengestellt.

**Tabelle 6**

| Retention von Cu-Ionen in % der Einsatzmenge | | | | | | | | | |
|---|---|---|---|---|---|---|---|---|---|
| Beregnung in mm | 0 | 36 | 70 | 106 | 140 | 176 | 212 | 247 | 283 |
| Vergl.Boden | 44,2 | 8,7 | 6,6 | 6,2 | 6,0 | 5,8 | 5,6 | 5,6 | 5,6 |
| 3 g A/l | 57,2 | 22,9 | 18,9 | 17,3 | 16,0 | 15,3 | 14,9 | 14,4 | 14,2 |
| 3 g B/l | 60,6 | 26,5 | 24,5 | 23,5 | 22,8 | 22,4 | 22,2 | 22,2 | 22,2 |
| 3 g VA/l | 52,1 | 19,1 | 8,4 | 4,7 | 2,7 | 1,9 | 1,4 | 1,0 | 0,7 |
| 3 g VB/l | 56,1 | 19,1 | 8,9 | 5,5 | 4,1 | 3,8 | 3,7 | 3,7 | 3,7 |
| 3 g VC/l | 59,2 | 19,1 | 12,0 | 6,9 | 6,1 | 5,7 | 5,5 | 5,5 | 5,5 |

### Beispiele 7 und 8:

Das Auswaschen von Spurenelementen durch Beregnung mit Salzwasser aus konditionierten Böden wurde analog zu Beispiel 6 untersucht, wobei jedoch an Stelle einer Cu-Lösung in Beispiel 7 eine Zn-Lösung in einer Menge, die 3,5 mg Zn pro 1 l Boden entsprach und in Beispiel 8 eine Mn-Lösung in einer Menge, die 6,875 g Mn pro 1 l Boden entsprach, den Säulen aufgegeben wurde. Die %Anteile der nach den einzelnen Beregnungsstufen im Boden zurückbleibenden Zn-, bzw. Mn-Anteile, in Abhängigkeit von der ursprünglich aufgenommenen Menge, sind in den Tabellen 7 und 8 zusammengestellt.

**Tabelle 7**

| Retention von Zn-Ionen in % der Einsatzmenge | | | | | | | | | |
|---|---|---|---|---|---|---|---|---|---|
| Beregnung in mm | 0 | 36 | 70 | 106 | 140 | 176 | 212 | 247 | 283 |
| Vergl.Boden | 41,8 | 7,5 | 4,7 | 4,2 | 3,9 | 3,5 | 3,4 | 3,3 | 3,2 |
| 3 g A/l | 57,9 | 25,0 | 20,8 | 18,9 | 17,3 | 16,2 | 15,9 | 15,5 | 15,3 |
| 3 g B/l | 58,8 | 24,9 | 21,7 | 20,5 | 19,5 | 18,9 | 18,5 | 18,1 | 17,9 |
| 3 g VA/l | 50,9 | 18,1 | 9,8 | 6,5 | 4,7 | 4,1 | 3,8 | 3,6 | 3,2 |
| 3 g VB/l | 51,3 | 15,5 | 7,3 | 4,3 | 3,2 | 2,9 | 2,7 | 2,5 | 2,3 |
| 3 g VC/l | 58,0 | 17,5 | 11,0 | 8,8 | 7,5 | 6,7 | 6,5 | 4,7 | 3,5 |

**Tabelle 8**

| Retention von Mn-Ionen in % der Einsatzmenge | | | | | | | | | |
|---|---|---|---|---|---|---|---|---|---|
| Beregnung in mm | 0 | 36 | 70 | 106 | 140 | 176 | 212 | 247 | 283 |
| Vergl.Boden | 49,9 | 20,7 | 11,1 | 7,5 | 7,3 | 7,1 | 7,0 | 6,5 | 6,3 |
| 3 g A/l | 63,4 | 36,3 | 28,4 | 24,0 | 20,2 | 18,1 | 16,7 | 15,0 | 14,2 |
| 3 g B/l | 63,3 | 34,7 | 27,7 | 24,5 | 21,7 | 19,6 | 18,2 | 16,8 | 15,9 |
| 3 g VA/l | 53,7 | 23,1 | 18,0 | 14,9 | 12,7 | 11,0 | 9,8 | 8,3 | 6,9 |
| 3 g VB/l | 54,6 | 21,2 | 18,3 | 16,6 | 15,5 | 14,5 | 13,8 | 12,2 | 11,3 |
| 3 g VC/l | 60,5 | 28,5 | 16,7 | 11,1 | 7,7 | 5,6 | 4,8 | 3,9 | 3,5 |

### Beispiel 9:

Copolymer A wurde mit einer MnSO₄, FeSO₄ und CuSo₄ enthaltenden Lösung so aufgequollen, daß es nach dem Trocknen den gelben Gehalt an absorbierten Spurenelementen aufwies wie Copolymer D, bei dem diese Salze bereits vor der Polymerisation in der Monomerenlösung gelöst wurden.

Beide Copolymere wurden analog zu Beispiel 5 mit Sand vermischt, in Glassäulen gefüllt und 8 mal mit salinem Wasser (1000 ppm Salzgehalt) jeweils 36 mm hoch beregnet.

In Tabelle 9 ist der %Anteil des nach den einzelnen Beregnungsschritten im Boden verbleibenden Fe, bezogen auf den Anfangsgehalt des Eisens im konditionierten Boden, zusammengestellt. Die Depotwirkung für Nährstoffe bei Verwendung von Copolymer D ist besser als bei Verwendung von Copolymer A mit durch Diffusion absorbierten Spurenelementen.

**Tabelle 9**

| Retention von Fe in % des Anfangsgehaltes | | | | | | | | |
|---|---|---|---|---|---|---|---|---|
| Beregnungsschritte (je 36 mm) | 1 | 2 | 3 | 4 | 5 | 6 | 7 | 8 |
| 3 g D/l | 82 | 72 | 63 | 59 | 56 | 54 | 52 | 51 |
| 3 g A+absorb.Spurenelemente/l | 64 | 37 | 29 | 25 | 21 | 18 | 16 | 15 |

## Patentansprüche (Patentansprüche für folgende(n) Vertragsstaat(en): AT, BE, CH, DE, DK, FR, GB, GR, IT, LI, LU, NL, SE)

1. Verwendung von sulfonsäuregruppenhältigen, vernetzten Copolymerisaten als Bodenkonditionierungsmittel, die aus den Polymerkomponenten
A) 50 bis 94,9 Mol% Acrylamid und/oder Methacrylamid,
B) 5 bis 49,9 Mol% einer eine Vinylgruppe enthaltenden Sulfonsäure oder deren Salz der allgemeinen Formel
CH₂ = CR₁ - CO - NH - R₂ - SO₃M
worin
R₁ Wasserstoff oder eine Methylgruppe,
R₂ eine geradkettige oder verzweigte Alkylengruppe mit 1 - 6 C-Atomen und
M Wasserstoff oder ein einwertiges Kation bedeuten,
C) 0,005 bis 0,1 Mol% einer mehrfunktionellen, wasserlöslichen Vinylverbindung
aufgebaut sind, wobei die Polymerkomponente B von 0 bis 85 Mol%, bezogen auf den Gehalt an Polymerkomponente B, durch carboxylgruppenhältige Comonomere ersetzt sein kann.

2. Verwendung von Copolymerisaten gemäß Anspruch 1, dadurch gekennzeichnet, daß sie zu 70 bis 79,9 Mol% aus einer Polymerkomponente A, zu 20 bis 29,9 Mol % aus einer Polymerkomponente B und zu 0,005 bis 0,1 Mol% aus einer Polymerkomponente C aufgebaut sind.

3. Verwendung von Copolymerisaten gemäß Anspruch 1 oder 2, dadurch gekennzeichnet, daß die Polymerkomponente A Acrylamid, die Polymerkomponente B ein Salz der Acrylamidomethylpropansulfonsäure und die Polymerkomponente C Methylenbisacrylamid ist.

4. Verwendung von Copolymerisaten gemäß einem der Ansprüche 1 bis 3, dadurch gekennzeichnet, daß die Copolymerisate zusätzlich Pflanzennährstoffe enthalten.

5. Verwendung von Copolymerisaten gemäß Anspruch 4, dadurch gekennzeichnet, daß die Pflanzennährstoffe aus der Gruppe der Stickstoff-, Phosphor-, Kalium-, Eisen-, Zink-, Kupfer-, Mangan-, Molybdän- und Borsalze ausgewählt sind.

6. Kultursubstrat zur Aufzucht von Pflanzen, dadurch gekennzeichnet, daß es aus einer Mischung von Sand, Torf, Perlit, Vermiculit, Baumrinde, Holzspänen, organischem Dünger, Stroh oder einem Gemisch dieser Bestandteile, mit Copolymerisaten gemäß einem der Ansprüche 1 bis 5 besteht.

7. Kultursubstrat gemäß Anspruch 6, dadurch gekennzeichnet, daß es 0,1 bis 10 g/l Copolymerisate enthält.

8. Verfahren zur Herstellung von Copolymerisaten gemäß Anspruch 4 oder 5, dadurch gekennzeichnet, daß der aus den Komponenten A, B und C gemäß Anspruch 1 bestehenden Monomerenlösung vor der Polymerisation Pflanzennährstoffe zugesetzt werden.

9. Verfahren zur Konditionierung von Böden, dadurch gekennzeichnet, daß dem Boden 0,1 bis 10 g/l Copolymerisat gemäß einem der Ansprüche 1 bis 5 zugegeben wird.

10. Verfahren zur Konditionierung von Böden gemäß Anspruch 9, dadurch gekennzeichnet, daß das im Boden vorhandene Copolymerisat zyklisch mit in Wasser gelösten Nährstoffen beladen bzw. wiederbeladen wird.

## Patentansprüche (Patentansprüche für folgende(n) Vertragsstaat(en): ES)

1. Verwendung von sulfonsäuregruppenhältigen, vernetzten Copolymerisaten als Bodenkonditionierungsmittel, die aus den Polymerkomponenten
A) 50 bis 94,9 Mol% Acrylamid und/oder Methacrylamid,
B) 5 bis 49,9 Mol% einer eine Vinylgruppe enthaltenden Sulfonsäure oder deren Salz der allgemeinen Formel
CH₂ = CR₁ - CO - NH - R₂ - SO₃M
worin
R1 Wasserstoff oder eine Methylgruppe
R2 eine geradkettige oder verzweigte Alkylengruppe mit 1 bis 6 C-Atomen und
M Wasserstoff oder ein einwertiges Kation bedeuten,
C) 0,005 bis 0,1 Mol% einer mehrfunktionellen, wasserlöslichen Vinylverbindung
aufgebaut sind, wobei die Polymerkomponente B von 0 bis 85 Mol%, bezogen auf den Gehalt an Polymerkomponente B, durch carboxylgruppenhältige Comonomere ersetzt sein kann.

2. Verwendung von Copolymerisaten gemäß Anspruch 1, dadurch gekennzeichnet, daß sie zu 70 bis 79,9 Mol% aus einer Polymerkomponente A, zu 20 bis 29,9 Mol% aus einer Polymerkomponente B und zu 0,005 bis 0,1 Mol% aus einer Polymerkomponente C aufgebaut sind.

3. Verwendung von Copolymerisaten gemäß Anspruch 1 und 2, dadurch gekennzeichnet, daß die Polymerkomponente A Acrylamid, die Polymerkomponente B ein Salz der Acrylamidomethylpropansulfonsäure und die Polymerkomponente C Methylenbisacrylamid ist.

4. Verwendung von Copolymerisaten gemäß einem der Ansprüche 1 bis 3, dadurch gekennzeichnet, daß die Copolymerisate zusätzlich Pflanzennährstoffe enthalten.

5. Verwendung von Copolymerisaten gemäß Anspruch 4, dadurch gekennzeichnet, daß die Pflanzennährstoffe aus der Gruppe der Stickstoff-, Phosphor-, Kalium-, Eisen-, Zink-, Kupfer-, Mangan-, Molybdän- und Borsalze ausgewählt sind.

6. Kultursubstrat zur Aufzucht von Pflanzen, dadurch gekennzeichnet, daß es aus einer Mischung von Sand, Torf, Perlit, Vermiculit, Baumrinde, Holzspänen, organischem Dünger, Stroh oder einem Gemisch dieser Bestandteile, mit Copolymerisaten gemäß einem der Ansprüche 1 bis 5 besteht.

7. Verfahren zur Herstellung eines Kultursubstrates gemäß Anspruch 6, dadurch gekennzeichnet, daß man Sand, Torf, Perlit, Vermiculit, Baumrinde, Holzspäne, organische Dünger, Stroh oder ein Gemisch dieser Bestandteile, mit Copolymerisaten gemäß Anspruch 1 oder 4 mischt.

8. Verfahren zur Herstellung von Copolymerisaten gemäß Anspruch 4 oder 5, dadurch gekennzeichnet, daß der aus den Komponenten A, B und C gemäß Anspruch 1 bestehenden Monomerenlösung vor der Polymerisation Pflanzennährstoffe zugesetzt werden.

9. Verfahren zur Konditionierung von Böden, dadurch gekennzeichnet, daß dem Boden 0,1 bis 10 g/l Copolymerisat gemäß einem der Ansprüche 1 bis 5 zugegeben wird.

10. Verfahren zur Konditionierung von Böden gemäß Anspruch 9, dadurch gekennzeichnet, daß das im Boden vorhandene Copolymerisat zyklisch mit in Wasser gelösten Nährstoffen beladen bzw. wiederbeladen wird.

## Claims (Claims for the following Contracting State(s): AT, BE, CH, DE, DK, FR, GB, GR, IT, LI, LU, NL, SE)

1. Use of sulphonyl-containing, cross-linked copolymers as soil conditioners, which copolymers are composed of the polymer components
A) 50 to 94.9 mol% of acrylamide and/or methacrylamide,
B) 5 to 49.9 mol% of a sulphonic acid or a salt thereof containing one vinyl group, of the general formula
CH₂=CR₁-CO-NH-R₂-SO₃M
where
R¹ denotes hydrogen or a methyl group,
R² denotes a straight-chain or branched alkylene group having 1 to 6 C atoms and
M denotes hydrogen or a monovalent cation, and
C) 0.005 to 0.1 mol% of a multi-functional water-soluble vinyl compound,
it being possible for the polymer component B to be substituted by 0 to 85 mol% of carboxyl-containing comonomers, based on the content of polymer component B.

2. Use of copolymers according to Claim 1, characterised in that they are composed of 70 to 79.9 mol% of a polymer component A, 20 to 29.9 mol% of a polymer component B and 0.005 to 0.1 mol% of a polymer component C.

3. Use of copolymers according to Claim 1 or 2, characterised in that the polymer component A is acrylamide, the polymer component B is a salt of acrylamidomethylpropanesulphonic acid, and the polymer component C is methylenebisacrylamide.

4. Use of copolymers according to one of Claims 1 to 3, characterised in that the copolymers additionally contain plant nutrients.

5. Use of copolymers according to Claim 4, characterised in that the plant nutrients are selected from the group of the nitrogen, phosphorus, potassium, iron, zinc, copper, manganese, molybdenum and boron salts.

6. Growth substrate for rearing plants, characterised in that it consists of a mixture of sand, peat, perlite, vermiculite, tree bark, wood shavings, organic fertilizer, straw or a mixture of these constituents, with copolymers according to one of Claims 1 to 5.

7. Growth substrate according to Claim 6, characterised in that it contains 0.1 to 10 g/l copolymers.

8. Process for preparing copolymers according to Claim 4 or 5, characterised in that plant nutrients are added to the monomer solution consisting of components A, B and C according to Claim 1, prior to polymerisation.

9. Method of conditioning soils characterised in that 0.1 to 10 g/l copolymer is added to the soil according to one of Claims 1 to 5.

10. Method of conditioning soils according to Claim 9 characterised in that the copolymer present in the soil is loaded, or reloaded, cyclically with nutrients dissolved in water.

## Claims (Claims for the following Contracting State(s): ES)

1. Use of sulphonyl-containing, cross-linked copolymers as soil conditioners, which copolymers are composed of the polymer components
A) 50 to 94.9 mol% of acrylamide and/or methacrylamide,
B) 5 to 49.9 mol% of a sulphonic acid or a salt thereof containing one vinyl group, of the general formula
CH₂=CR₁-CO-NH-R₂-SO₃M
where
R¹ denotes hydrogen or a methyl group
R² denotes a straight-chain or branched alkylene group having 1 to 6 C atoms and
M denotes hydrogen or a monovalent cation, and
C) 0.005 to 0.1 mol% of a multi-functional water-soluble vinyl compound,
it being possible for the polymer component B to be substituted by 0 to 85 mol% of carboxyl-containing comonomers, based on the content of polymer component B.

2. Use of copolymers according to Claim 1, characterised in that they are composed of 70 to 79.9 mol% of a polymer component A, 20 to 29.9 mol% of a polymer component B and 0.005 to 0.1 mol% of a polymer component C.

3. Use of copolymers according to Claim 1 and 2, characterised in that the polymer component A is acrylamide, the polymer component B is a salt of acrylamidomethylpropanesulphonic acid, and the polymer component C is methylenebisacrylamide.

4. Use of copolymers according to one of Claims 1 to 3, characterised in that the copolymers additionally contain plant nutrients.

5. Use of copolymers according to Claim 4, characterised in that the plant nutrients are selected from the group of the nitrogen, phosphorus, potassium, iron, zinc, copper, manganese, molybdenum and boron salts.

6. Growth substrate for rearing plants, characterised in that it consists of a mixture of sand, peat, perlite, vermiculite, tree bark, wood shavings, organic fertilizer, straw or a mixture of these constituents, with copolymers according to one of Claims 1 to 5.

7. Process for preparing a growth substrate according to Claim 6, characterised in that sand, peat, perlite, vermiculite, tree bark, wood shavings, organic fertilisers, straw or a mixture of these constituents are mixed with copolymers according to Claim 1 or 4.

8. Process for preparing copolymers according to Claim 4 or 5, characterised in that plant nutrients are added to the monomer solution consisting of components A, B and C according to Claim 1, prior to polymerisation.

9. Method of conditioning soils characterised in that 0.1 to 10 g/l copolymer according to one of Claims 1 to 5 is added to the soil.

10. Method of conditioning soils according to Claim 9 characterised in that the copolymer present in the soil is loaded, or reloaded, cyclically with nutrients dissolved in water.

## Revendications (Revendications pour l'(les) Etat(s) contractant(s) suivant(s): AT, BE, CH, DE, DK, FR, GB, GR, IT, LI, LU, NL, SE)

1. Utilisation de copolymères réticulés contenant des radicaux acide sulfonique en tant qu'agents de conditionnement du sol, qui sont formés des composants de polymères:
A) de 50 à 94,9 moles % d'acrylamide et/ou de méthacrylamide,
B) de 5 à 49,9 moles % d'un acide sulfonique contenant un radical vinyle ou de son sel de la formule générale :
CH₂ = CR₁ - CO - NH - R₂ - SO₃M
où
R₁ représente un atome d'hydrogène ou un radical méthyle,
R₂ représente un radical alcoylène en chaîne droite ou ramifiée de 1 à 6 atomes de carbone, et
M représente un atome d'hydrogène ou un cation monovalent,
C) de 0,005 à 0,1 mole % d'un composé vinylique polyfonctionnel hydrosoluble,
le composant de polymère B pouvant être remplacé par des comonomères contenant des radicaux carboxyle pour 0 à 85 moles %, sur la base de la teneur en composant de polymère B.

2. Utilisation de copolymères suivant la revendication 1, caractérisée en ce qu'ils sont formés de 70 à 79,9 moles % d'un composant de polymère A, de 20 à 29,9 moles % d'un composant de polymère B et de 0,005 à 0,1 mole % d'un composant de polymère C.

3. Utilisation de copolymères suivant la revendication 1 ou 2, caractérisée en ce que le composant de polymère A est l'acrylamide, le composant de polymère B est un sel de l'acide acrylamidométhylpropanesulfonique et le composant de polymère C est le méthylène-bisacrylamide.

4. Utilisation de copolymères suivant l'une quelconque des revendications 1 à 3, caractérisée en ce que les copolymères contiennent, en outre, des éléments nutritifs pour les plantes.

5. Utilisation de copolymères suivant la revendication 4, caractérisée en ce que les éléments nutritifs pour les plantes sont choisis dans la classe formée par les sels d'azote, de phosphore, de potassium, de fer, de zinc, de cuivre, de manganèse, de molybdène et de bore.

6. Substrat de culture pour la croissance des plantes, caractérisé en ce qu'il consiste en un mélange de sable, de tourbe, de perlite, de vermiculite, d'écorce d'arbre, de copeaux de bois, d'engrais organique, de paille ou d'un mélange de ces constituants avec des copolymères suivant l'une quelconque des revendications 1 à 5.

7. Substrat de culture suivant la revendication 6, caractérisé en ce qu'il contient 0,1 à 10 g par litre des copolymères.

8. Procédé de préparation de copolymères suivant la revendication 4 ou 5, caractérisé en ce que des éléments nutritifs pour les plantes sont ajoutés avant la polymérisation à une solution de monomères consistant en les composants A, B et C suivant la revendication 1.

9. Procédé de conditionnement de sols, caractérisé en ce qu'on ajoute 0,1 à 10 g par litre de copolymère au sol suivant l'une quelconque des revendications 1 à 5.

10. Procédé de conditionnement de sols suivant la revendication 9, caractérisé en ce que le copolymère contenu dans le sol est chargé ou rechargé cycliquement d'éléments nutritifs dissous dans de l'eau.

## Revendications (Revendications pour l'(les) Etat(s) contractant(s) suivant(s): ES)

1. Utilisation de copolymères réticulés contenant des radicaux acide sulfonique en tant qu'agents de conditionnement du sol qui sont formés des composants de polymères:
A) de 50 à 94,9 moles % d'acrylamide et/ou de méthacrylamide,
B) de 5 à 49,9 moles % d'un acide sulfonique contenant un radical vinyle ou de son sel de la formule générale :
CH₂ = CR₁ - CO - NH - R₂ - SO₃M
où
R₁ représente un atome d'hydrogène ou un radical méthyle,
R₂ représente un radical alcoylène en chaîne droite ou ramifiée de 1 à 6 atomes de carbone, et
M représente un atome d'hydrogène ou un cation monovalent,
C) de 0,005 à 0,1 mole % d'un composé vinylique polyfonctionnel hydrosoluble,
le composant de polymère B pouvant être remplacé par des comonomères contenant des radicaux carboxyle pour 0 à 85 moles %, sur la base de la teneur en composant de polymère B.

2. Utilisation de copolymères suivant la revendication 1, caractérisée en ce qu'ils sont formés de 70 à 79,9 moles % d'un composant de polymère A, de 20 à 29,9 moles % d'un composant de polymère B et de 0,005 à 0,1 mole % d'un composant de polymère C.

3. Utilisation de copolymères suivant la revendication 1 et 2, caractérisée en ce que le composant de polymère A est l'acrylamide, le composant de polymère B est un sel de l'acide acrylamidométhylpropanesulfonique et le composant de polymère C est le méthylène-bisacrylamide.

4. Utilisation de copolymères suivant l'une quelconque des revendications 1 à 3, caractérisée en ce que les copolymères contiennent, en outre, des éléments nutritifs pour les plantes.

5. Utilisation de copolymères suivant la revendication 4, caractérisée en ce que les éléments nutritifs pour les plantes sont choisis dans la classe formée par les sels d'azote, de phosphore, de potassium, de fer, de zinc, de cuivre, de manganèse, de molybdène et de bore.

6. Substrat de culture pour la croissance des plantes, caractérisé en ce qu'il consiste en un mélange de sable, de tourbe, de perlite, de vermiculite, d'écorce d'arbre, de copeaux de bois, d'engrais organique, de paille ou d'un mélange de ces constituants avec des copolymères suivant l'une quelconque des revendications 1 à 5.

7. Procédé de préparation d'un substrat de culture suivant la revendication 6, caractérisé en ce que l'on mélange du sable, de la tourbe, de la perlite, de la vermiculite, de l'éncorce d'arbre, des copeaux de bois, de l'engrais organique, de la faille ou un mélange de ces constituants avec des copolymères suivant la revendication 1 ou 4.

8. Procédé de préparation de copolymères suivant la revendication 4 ou 5, caractérisé en ce que des éléments nutritifs pour les plantes sont ajoutés avant la polymérisation à la solution de monomères consistant en les composants A, B et C suivant la revendication 1.

9. Procédé de conditionnement de sols, caractérisé en ce qu'on ajoute 0,1 à 10 g par litre de copolymère au sol suivant l'une quelconque des revendications 1 à 5.

10. Procédé de conditionnement de sols suivant la revendication 9, caractérisé en ce que le copolymère contenu dans le sol est chargé ou rechargé cycliquement d'éléments nutritifs dissous dans de l'eau.
